# EUROPEAN PATENT APPLICATION

(11) **EP 4 567 968 A1**
(43) Date of publication of application: **11.06.2025**
(21) Application number: 24207364.1
(22) Date of filing: 18.10.2024
(51) Int. Cl.: H01M 10/613, H01M 10/615, H01M 10/647, H01M 10/653, H01M 10/658, H01M 50/209, H01M 50/224, H01M 50/227, H01M 50/231, H01M 50/24, H01M 50/278, H01M 50/282, H01M 50/293, H01M 50/291

(54) **BATTERY MODULE, SIDE COVER OF BATTERY MODULE AND METHOD OF MANUFACTURING SIDE COVER OF BATTERY MODULE**

(30) Priority: 05.12.2023 KR 20230174874
(71) Applicant: SAMSUNG SDI CO., LTD., Yongin-si, Gyeonggi-do 17084 (KR)
(72) Inventor: Lee, Jonghyeok, 17084 Yongin-Si, Gyeonggi-do (KR)
(74) Representative: Gulde & Partner

(57) **Abstract**

A battery module (1) includes: a cell stack comprising a plurality of battery cells (10) stacked in a direction; and side covers (20) on opposite sides of the cell stack, wherein each of the side covers includes: a plate-shaped side plate comprising a plurality of coupling holes; and an insulating molded product comprising a coupling portion filling the coupling holes.

## Description

### BACKGROUND

### 1. Field

Aspects of some embodiments of the present disclosure relate to a battery module, a side cover of a battery module, and a method of manufacturing a side cover.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is only for enhancement of understanding of the background and therefore the information discussed in this Background section does not necessarily constitute prior art.

### SUMMARY

Aspects of some embodiments of the present disclosure include a battery module, a side cover of a battery module, and a method of manufacturing a side cover.

These and other aspects and features of embodiments according to the present disclosure will be described in or will be apparent from the following description of embodiments of the present disclosure.

A first aspect of the present disclosure refers to an embodiment of battery module , which includes a cell stack including a plurality of battery cells stacked in one direction, and side covers provided on opposite sides of the cell stack, wherein each of the side covers includes a plate-shaped side plate comprising a plurality of coupling holes and an (e.g. thermally) insulating molded product comprising a coupling portion filling the coupling holes.

According to some embodiments of the present disclosure, the insulating molded product may be provided integrally (e.g. formed integrally) with the side plate by insert injection.

According to some embodiments of the present disclosure, the insulating molded product may include a plate-shaped body covering at least a portion of a first surface of the side plate facing the cell stack, and the coupling portion may include a plurality of coupling protrusions provided integrally (e.g. formed integrally) with the plate-shaped body.

According to some embodiments of the present disclosure, the side plate may include a recess provided in at least a portion of the first surface and recessed toward a second surface opposite the first surface, and the plate-shaped body of the insulating molded product may cover the recess of the side plate.

According to some embodiments of the present disclosure, the insulating molded product may include a plate-shaped first plate covering at least a portion of a first surface of the side plate facing the cell stack and a plate-shaped second plate covering at least a portion of a second surface of the side plate opposite the first surface.

According to some embodiments of the present disclosure, the coupling portion is provided integrally (e.g. formed integrally) with the first plate and the second plate, and may include a plurality of coupling columns connecting the first plate and the second plate.

According to some embodiments of the present disclosure, the side plate may include a recess provided in at least a portion of the first surface and recessed toward the second surface, and the first plate of the insulating molded product covers the recess of the side plate.

According to some embodiments of the present disclosure, each of the battery cells may include a prismatic battery cell.

According to some embodiments of the present disclosure, a battery module may further include a pair of end plates supporting outermost surfaces of the cell stack in one direction, and an end insulating cover provided between the cell stack and the end plates.

A side cover of a battery module according to some embodiments of the present disclosure may include a plate-shaped side plate including a plurality of coupling holes, and an insulating molded product comprising a coupling portion filling the coupling holes.

A second aspect of the present disclosure relates to an implementation of a method of manufacturing a side cover of a battery module, which includes placing a plate-shaped side plate comprising a plurality of coupling holes in an injection mold, injecting a molten resin into a cavity inside the injection mold in which the side plate is placed, cooling the molten resin to form an insulating molded product comprising a coupling portion filling the coupling holes, and removing an integral side cover comprising the side plate and the insulating molded product from inside the injection mold.

According to some implementations of the present disclosure, the insulating molded product may comprise a plate-shaped body covering at least a portion of the side plate, and the coupling portion may comprise a plurality of coupling protrusions provided integrally with the plate-shaped body.

According to some implementations of the present disclosure, the side plate may include a recess provided in at least a portion of a first surface and recessed toward a second surface opposite the first surface, and the cavity into which the molten resin is injected may be the recess of the side plate.

According to some implementations of the present disclosure, the insulating molded product may comprise a plate-shaped first plate covering at least a portion of a first surface of the side plate and a plate-shaped second plate covering at least a portion of a second surface of the side plate opposite the first surface, and the coupling portion is provided integrally with the first plate and the second plate, and comprises a plurality of coupling columns connecting the first plate and the second plate.

According to some implementations of the present disclosure, the cavity into which the molten resin is injected may be provided on a first surface side of the side plate and a second surface side opposite the first surface side.

According to some implementations of the present disclosure, the placing of the side plate in the injection mold may include locating the side plate in a lower mold of the injection mold and fitting an upper mold of the injection mold to the lower mold.

However, the characteristics of embodiments according to the present disclosure are not limited to the above problem, and other problems not mentioned herein, and aspects and features of the present disclosure that would address such problems, will be clearly understood by those skilled in the art from the description of the present disclosure below.

According to some embodiments of the present disclosure, the strength of the battery module may be increased, and an excellent insulation effect may be expected.

According to some embodiments of the present disclosure, in response to the insulating molded product being manufactured by injection molding at a relatively low temperature, compared to a conventional insulation paper attachment method by thermal fusion, thermal damage applied to the side plate may be prevented or reduced. Thus, a defect rate due to the warping of the side plate or the like may be reduced. In addition, the reduced cooling time may reduce production cycle time, which may lead to increased productivity.

According to some embodiments of the present disclosure, the insulating molded product manufactured to cover opposite surfaces of the side plate may perform not only a function of insulating the side plate and the cell stack from each other, but also a function of preventing or reducing heat transfer to an adjacent module.

However, aspects and features of embodiments according to the present disclosure are not limited to those described above, and other aspects and features not mentioned will be clearly understood by a person skilled in the art from the detailed description, described below.

### Brief DESCRIPTION OF the DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view showing an example of a battery cell according to some embodiments of the present disclosure.
FIG. 2 illustrates an exploded perspective view showing an example of exploded portions of a battery module according to some embodiments of the present disclosure.
FIG. 3 illustrates a perspective view showing an example of the side cover according to some embodiments of the present disclosure.
FIG. 4 illustrates a perspective view showing an example of the side cover of FIG. 3, seen on another side.
FIG. 5 illustrates a perspective view showing an example of the side plate according to some embodiments of the present disclosure.
FIG. 6 illustrates a perspective view showing an example of the insulating molded product according to some embodiments of the present disclosure.
FIG. 7 illustrates a plan view showing an example of the insulating molded product according to some embodiments of the present disclosure.
FIG. 8 illustrates a cross-sectional view showing an example in which the side cover of FIG. 4 is cut along a cutting line A-A'.
FIG. 9 illustrates a perspective view showing an example of a side cover according to some embodiments of the present disclosure.
FIG. 10 illustrates a perspective view showing an example of the side cover of FIG. 9, seen on another side.
FIG. 11 illustrates a plan view showing an example of the insulating molded product according to some embodiments of the present disclosure.
FIG. 12 illustrates a cross-sectional view showing an example in which the side cover of FIG. 9 is cut along a cutting line B-B'.
FIG. 13 illustrates a flowchart showing an example of a method of manufacturing a side cover of a battery module according to some embodiments of the present disclosure.

### DETAILED DESCRIPTION

Hereinafter, aspects of some embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A battery pack according to one or more embodiments includes at least one battery module and a pack housing having an accommodation space in which the at least one battery module is accommodated.

The battery module may include a plurality of battery cells and a module housing. The battery cells may be accommodated inside the module housing in a stacked form (or stacked arrangement or configuration). Each battery cell may have a positive electrode terminal and a negative electrode terminal and may be a circular type, a prismatic type, or a pouch type according to the shape of battery. In the present specification, a battery cell may also be referred to as a secondary battery, a battery, or a cell.

In the battery pack, one cell stack may constitute one module stacked in place of the battery module. The cell stack may be accommodated in an accommodation space of the pack housing or may be accommodated in an accommodation space partitioned by a frame, a partition wall, etc.

The battery cell may generate a large amount of heat during charging/discharging. The generated heat may be accumulated in the battery cell, thereby accelerating the deterioration of the battery cell. Accordingly, the battery pack may further include a cooling member to remove the generated heat and thereby suppress deterioration of the battery cell. The cooling member may be provided at the bottom of the accommodation space at where the battery cell is provided but is not limited thereto and may be provided at the top or side depending on the battery pack.

The battery cell may be configured such that exhaust gas generated inside the battery cell under abnormal operating conditions, also known as thermal runaway or thermal events, is discharged to the outside of the battery cell. The battery pack or the battery module may include an exhaust port for discharging the exhaust gas to prevent or reduce damage to the battery pack or module by the exhaust gas.

The battery pack may include a battery and a battery management system (BMS) for managing the battery. The battery management system may include a detection device, a balancing device, and a control device. The battery module may include a plurality of cells connected to each other in series and/or parallel. The battery modules may be connected to each other in series and/or in parallel.

The detection device may detect a state of a battery (e.g., voltage, current, temperature, etc.) to output state information indicating the state of the battery. The detection device may detect the voltage of each cell constituting the battery or of each battery module. The detection device may detect current flowing through each battery module constituting the battery module or the battery pack. The detection device may also detect the temperature of a cell and/or module on at least one point of the battery and/or an ambient temperature.

The balancing device may perform a balancing operation of a battery module and/or cells constituting the battery module. The control device may receive state information (e.g., voltage, current, temperature, etc.) of the battery module from the detection device. The control device may monitor and calculate the state of the battery module (e.g., voltage, current, temperature, state of charge (SOC), life span (state of health (SOH)), etc.) on the basis of the state information received from the detection device. In addition, on the basis of the monitored state information, the control device may perform a control function (e.g., temperature control, balancing control, charge/discharge control, etc.) and a protection function (e.g., over-discharge, over-charge, over-current protection, short circuit, fire extinguishing function, etc.). In addition, the control device may perform a wired or wireless communication function with an external device of the battery pack (e.g., a higher level controller or vehicle, charger, power conversion system, etc.).

The control device may control charging/discharging operation and protection operation of the battery. To this end, the control device may include a charge/discharge control unit, a balancing control unit, and/or a protection unit.

The battery management system is a system that monitors the battery state and performs diagnosis and control, communication, and protection functions, and may calculate the charge/discharge state, calculate battery life or state of health (SOH), cut off, as necessary, battery power (e.g., relay control), control thermal management (e.g., cooling, heating, etc.), perform a high-voltage interlock function, and/or may detect and/or calculate insulation and short circuit conditions.

A relay may be a mechanical contactor that is turned on and off by the magnetic force of a coil or a semiconductor switch, such as a metal oxide semiconductor field effect transistor (MOSFET).

The relay control has a function of cutting off the power supply from the battery if (or when) a problem occurs in the vehicle and the battery system and may include one or more relays and pre-charge relays at the positive terminal and the negative terminal, respectively.

In the pre-charge control, there is a risk of inrush current occurring in the high-voltage capacitor on the input side of the inverter when the battery load is connected. Thus, to prevent or reduce inrush current when starting a vehicle, the pre-charge relay may be operated before connecting the main relay and the pre-charge resistor may be connected.

The high-voltage interlock is a circuit that uses a small signal to detect whether or not all high-voltage parts of the entire vehicle system are connected and may have a function of forcibly opening a relay if (or when) an opening occurs at even one location on the entire loop.

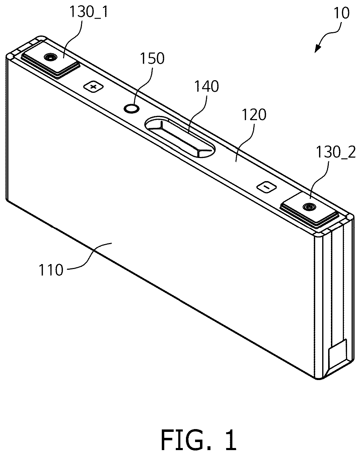

FIG. 1 illustrates a perspective view showing an example of a battery cell 10 according to some embodiments of the present disclosure. The battery cell 10 may include: one or more electrode assemblies wound or stacked, with a separator, for example, an electrical insulator, being provided between a positive electrode and a negative electrode; a casing 110 including the electrode assemblies provided therein; and a cap plate 120 coupled to (and/or at least partially inserted in) one open end of the casing 110. The battery cell 10 shown in FIG. 1 may be a secondary battery.

Each of the positive electrode and the negative electrode may include a current collector made of a conductive material, for example, a thin metal foil having a coated portion on which an active material is coated and an uncoated portion on which an active material is not coated.

The positive electrode and the negative electrode are wound after interposing the separator, which is an (electrical) insulator, therebetween. However, embodiments according to the present disclosure are not limited thereto, and the electrode assembly may have a structure in which a positive electrode and a negative electrode, each made of a plurality of sheets, are alternately stacked with a separator interposed therebetween.

The case 110 may form the overall outer appearance of the battery cell 10 and may be made of a conductive metal, such as aluminum, aluminum alloy, or nickel-plated steel. In addition, the case 110 may provide a space in which the electrode assembly is accommodated. According to some embodiments, the casing 110 may be a prismatic casing and the battery cell 10 may be a prismatic battery cell. However, the scope of embodiments according to the present disclosure is not limited thereto, and the battery cell 10 may be any shape battery cell, such as an angular battery cell, a cylindrical battery cell, or a pouch-shaped battery cell.

The cap plate 120 may be coupled to the open end of the casing 110 to seal the casing 110. The casing 110 and the cap plate 120 may include a conductive material. According to some embodiments, the upper end of the casing 110 may be open, and the cap plate 120 may seal the open upper end of the casing 110.

A positive electrode terminal 130_1 electrically connected to the positive electrode and a negative electrode terminal 130_2 electrically connected to the negative electrode may be coupled to the cap plate 120. For example, the positive and negative electrode terminals 130_1 and 130_2 may be provided to protrude outward through the cap plate 120.

According to some embodiments, a vent 140 may be provided in at least one surface of the battery cell 10 (e.g., the upper surface of the battery cell 10, i.e., the cap plate 120, in the shown example). The vent 140 may be configured to be opened in a case where an internal pressure equal to or higher than a threshold pressure (e.g., a set or predetermined threshold pressure) is detected in the battery cell 10.

According to some embodiments, the cap plate 120 may include an electrolyte inlet 150. For example, the electrolyte inlet 150 may be a through-hole provided in the cap plate 120. The electrolyte inlet 150 may be formed to allow electrolyte to be injected into the casing 110 therethrough after the cap plate 120 is coupled to the opening of the casing 110 to seal the casing 110. The electrolyte inlet 150 may be sealed with a sealing member after the injection of the electrolyte.

The battery cell 10 may be a lithium (Li) battery cell, a sodium (Na) battery cell, or the like. However, the scope of embodiments according to the present disclosure is not limited thereto, and the battery cell 10 includes any battery able to repeatedly provide electricity due to charge and discharge. According to some embodiments, in a case where the battery cell 10 is a Li battery cell, the battery cell 10 may be used in an electric vehicle (EV) due to excellent lifespan characteristics and high rate characteristics. In addition, the battery cell 10 may be used in a hybrid vehicle such as a plug-in hybrid electric vehicle (PHEV). The Li battery cell may be used in a field requiring a large amount of power storage. For example, the Li battery cell may be used in e-bikes, power tools, and the like.

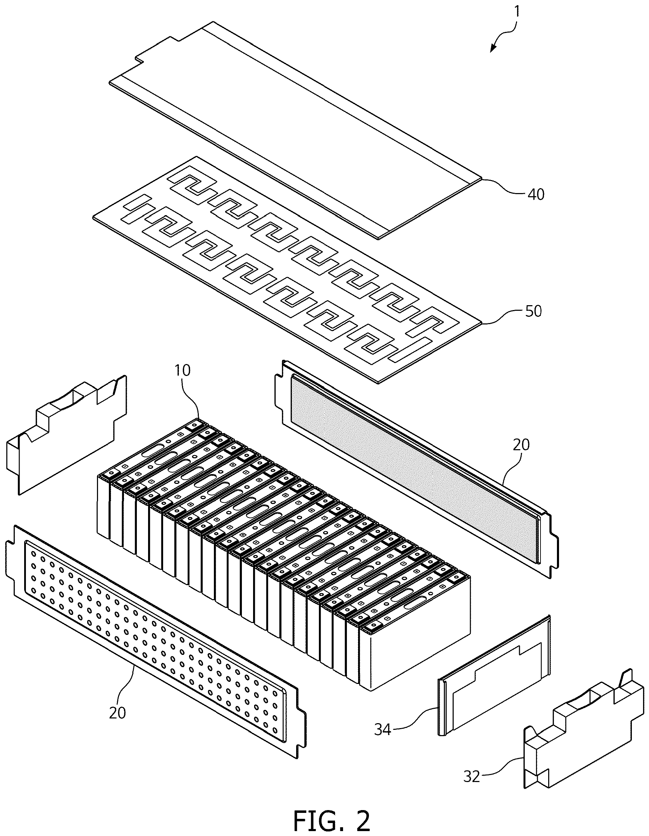

FIG. 2 illustrates an exploded perspective view showing an example of exploded portions of a battery module 1 according to embodiments of the present disclosure. Referring to FIG. 2, the battery module 1 according to some embodiments of the present disclosure may include a cell stack, a frame 20, 32, 34, and 40 containing the cell stack therein, and a busbar holder assembly 50. According to some embodiments, the battery module 1 may be referred to as a battery pack. According to some embodiments, the battery module 1 may be included in a vehicle.

The battery module 1 may include the cell stack. The cell stack may include a plurality of battery cells 10 stacked in one direction. According to some embodiments, in the cell stack, the battery cells 10 may be arranged in one direction such that wider surfaces face each other.

According to some embodiments, each of the battery cells 10 may include a casing, electrode assemblies contained together with electrolyte inside the casing, and a cap plate sealing the casing. Each of the electrode assemblies may be formed by sequentially winding or stacking a negative electrode plate, a separator, and a positive electrode plate. The negative electrode plate implemented as a metal foil of, for example, a copper (Cu), a Cu alloy, nickel (Ni), or a Ni alloy, may be applied or coated with a negative active material of, for example, graphite or carbon (C). The positive electrode plate implemented as a metal foil of, for example, aluminum (Al) or an Al alloy, may be applied or coated with an active material such as transition metal oxide. Each of the negative electrode plate and the positive electrode plate may be provided with an uncoated portion, i.e., an area to which no active material is applied. A negative electrode tab may be connected to the negative electrode uncoated portion, and a positive electrode tab may be connected to the positive electrode uncoated portion. The negative electrode tab and the positive electrode tab connected in this manner may be electrically connected to the negative electrode terminal and the positive electrode terminal provided on the plate, respectively. The negative electrode terminal and the positive electrode terminal provided on the cap plate may be electrically connected to busbars. However, the structure of the battery cells 10 is not limited thereto, and may be suitably altered as desired. In addition, the number and arrangement of the battery cells 10 are not limited to the structure shown in FIG. 2, and may be suitably changed as desired.

The cell stack may be contained in the frame 20, 32, 34, and 40. In some embodiments, the frame 20, 32, 34, and 40 may include: a pair of side covers 20 provided on opposite sides of the cell stack; a pair of end plates 32 perpendicularly coupled to the side covers 20 and supporting outermost surfaces of the cell stack in one direction (i.e., the direction of the arrangement of the battery cells 10); an end insulating cover 34 provided between the cell stack and the end plates 32; and an upper cover 40 provided above the cell stack (or above a busbar holder assembly 50 above the cell stack). According to some embodiments, a lower plate or a lower cover may be provided below the cell stack to support the cell stack from below. The cell stack, the busbar holder assembly 50, and the like may be received in the frame 20, 32, 34, and 40.

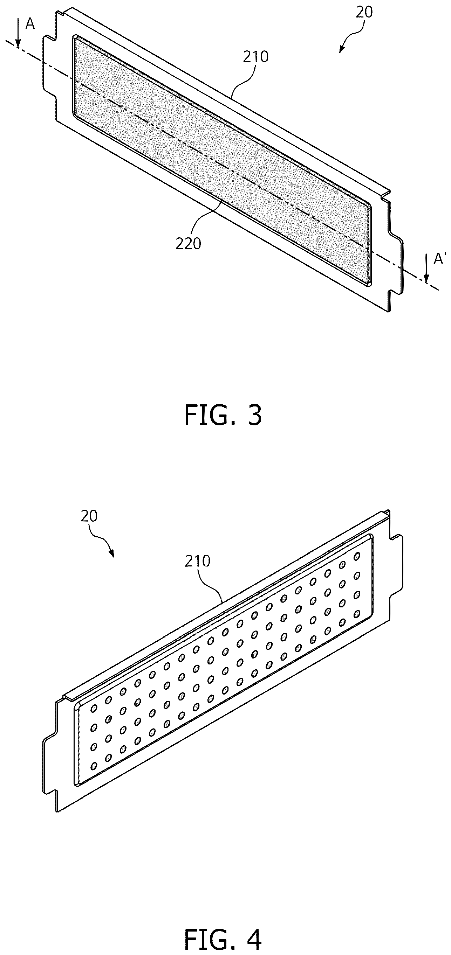

In some embodiments, each of the side covers 20 may include a plate-shaped side plate having a plurality of coupling holes and an insulating molded product provided with a coupling portion filling the coupling holes provided in the side plate. The features thereof will be described in more detail later with reference to FIGS. 3 to 12.

The busbar holder assembly 50 may include a plurality of busbars electrically connected to the battery cells; a busbar holder supporting the busbars; and a circuit board electrically connected to the busbars and mounted with various circuits and components. The busbar holder may be provided above the cap plate and support the busbars. For example, the busbar holder may be a substantially rectangular plate, and may be made of an (electrically) insulating material.

The busbar holder may be provided with a plurality of through-holes through which the positive electrode terminal and the negative electrode terminal of the cap plate are exposed. The positive electrode terminal and the negative electrode terminal may be exposed through the through-holes formed in the busbar holder, and the busbars may be electrically connected to the exposed positive electrode terminal and the negative electrode terminal.

The busbars may electrically connect the positive electrode terminal and the negative electrode terminal. The busbars may connect the battery cells 10 in series and/or parallel. For this purpose, the busbars may be provided as a plurality of busbars. In some embodiments, the busbars may electrically connect the positive electrode terminal of one battery cell 10 to the positive electrode terminal or the negative electrode terminal of another battery cell 10. In addition or in another example, the busbars may electrically connect the negative electrode terminal of one battery cell 10 to the positive electrode terminal or the negative electrode terminal of another battery cell 10. The busbars may be connected to the positive electrode terminal and/or the negative electrode terminal by welding or the like. Areas of each of the battery cells 10, other than the positive electrode terminal and the negative electrode terminal, may be electrically and/or thermally insulated from the busbars by the busbar holder. A circuit board may be provided between the busbars and the top plate, and the busbars may be electrically connected to the circuit board.

Various components for measuring state information of the battery cells 10, such as voltages and/or temperatures of the battery cells 10, various components or circuits configured to control and/or manage the battery cells 10, and the like may be mounted on the circuit board. According to some embodiments, the circuit board may include a battery management system (BMS). According to some embodiments, the circuit board may be electrically connected to the outside of the battery module 1 through a separate connector.

FIG. 3 illustrates a perspective view showing an example of the side cover 20 according to embodiments of the present disclosure, and FIG. 4 illustrates a perspective view showing an example of the side cover 20 of FIG. 3, seen on another side. The perspective view of FIG. 3 may mainly show a first surface (e.g., a surface facing the cell stack) of the side cover 20 according to embodiments of the present disclosure, and the perspective view of FIG. 4 may mainly show a second surface of the side cover 20 according to embodiments of the present disclosure, i.e., a surface facing the first surface.

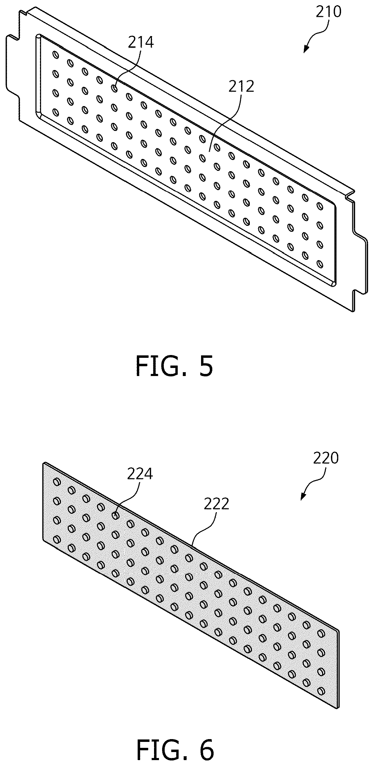

Referring to FIGS. 3 and 4, the side cover 20 may include a side plate 210 and an insulating molded product 220. The side plate 210 may have a plate shape elongated in one direction (e.g., the direction of the arrangement of the battery cells), and may be provided with a plurality of coupling holes. The specific configuration of the side plate 210 will be described in more detail later with reference to FIG. 5.

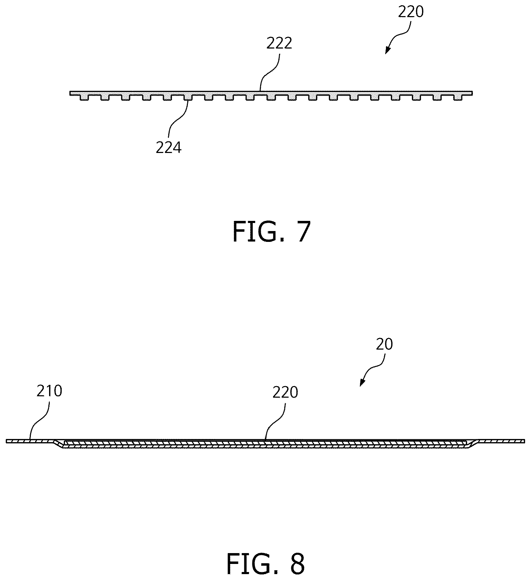

In some embodiments, the insulating molded product 220 may have a plate-shaped body elongated in one direction, in which the plate-shaped body may cover at least a portion of the first surface (e.g., a surface facing the cell stack) of the side cover 20. In addition, the insulating molded product 220 may be provided the coupling portion filling the coupling holes of the side plate 210. For example, the coupling portion of the insulating molded product 220 may include a plurality of coupling protrusions provided integrally with the plate-shaped body of the insulating molded product 220. The specific configuration of the insulating molded product 220 according to embodiments will be described in more detail later with reference to FIGS. 6 and 7.

In the battery module, one side cover 20 may be provided to face one side surface of the cell stack, and a pair of side covers 20 may be provided on opposite sides of the cell stack. The insulating molded product 220 may perform a function of insulating the side plate 210 and the cell stack from each other.

FIG. 5 illustrates a perspective view showing an example of the side plate 210 according to embodiments of the present disclosure. Referring to FIG. 5, the side plate 210 may have a plate shape elongated in one direction (i.e., the direction of the arrangement of the battery cells in the battery module). According to some embodiments, the side plate 210 may be provided with a recess 212. For example, in the side plate 210, at least a portion of the first surface (e.g., a surface facing the cell stack in the battery module) may be recessed toward the second surface facing the first surface, thereby forming the recess 212. According to some embodiments, the recess 212 of the side plate 210 may be covered with at least a portion of the insulating molded product (e.g., a body of the insulating molded product or a first plate of the insulating molded product).

According to some embodiments, the side plate 210 may be provided with a plurality of coupling holes 214. According to some embodiments, the coupling holes 214 may be provided in the recess 212 of the side plate 210. The coupling portion of the insulating molded product may fill the coupling holes 214 provided in the side plate 210. In FIG. 5, the side plate 210 is shown as having 80 circular coupling holes. The number, shape, arrangement, and the like of the coupling holes 214 are not limited to those shown in FIG. 5, and may be suitably selected as desired.

According to some embodiments, the side plate 210 may include at least a portion of a metal material suitable for maintaining the strength of the battery module and suitable for being connected another plate or another cover by welding.

According to some embodiments, opposite ends of the side plate 210 may be fastened or connected to an end plate. For example, opposite ends of the side plate 210 may respectively have a partially protruding structure, and may be fastened or connected to the end plate through at least a portion of the protruding portion. In addition, at least a portion of the side plate 210 in contact with the end plate may be fixed by, for example, welding.

FIG. 6 illustrates a perspective view showing an example of the insulating molded product 220 according to embodiments of the present disclosure, and FIG. 7 illustrates a plan view showing an example of the insulating molded product 220 according to embodiments of the present disclosure. The plan view of FIG. 7 may show an example in which the insulating molded product 220 according to embodiments of the present disclosure is viewed from above (e.g., from an upper cover side of the battery module, or in a plan view). Referring to FIGS. 6 and 7, the insulating molded product 220 may have a plate-shaped body 222 elongated in one direction (e.g., the direction of the arrangement of the battery cells in the battery module, i.e., the longitudinal direction of the side plate). In some embodiments, the plate-shaped body 222 of the insulating molded product 220 may cover at least a portion of the first surface of the side plate. For example, the body 222 of the insulating molded product 220 may fill at least a portion of the recess of the side plate.

According to some embodiments, the insulating molded product 220 may be provided with the coupling portion filling the coupling holes of the side plate. For example, the coupling portion of the insulating molded product 220 may include a plurality of coupling protrusions 224 provided integrally with the plate-shaped body 222 of the insulating molded product 220. In a specific example, at least a portion of the second surface (i.e., the lower surface in FIG. 7) facing the first surface of the insulating molded product 220 (i.e., the upper surface in FIG. 7 or a surface facing the cell stack in the battery module) may protrude outward (i.e., downward in FIG. 7), thereby forming the coupling protrusions 224. The coupling protrusions 224 of the insulating molded product 220 may be provided in the same number as the coupling holes of the side plate, and may be arranged in the same manner as the coupling holes of the side plate. A non-protruding portion of the second surface of the insulating molded product 220 may cover at least a portion of the first surface of the side plate, and the coupling protrusions 224 of the insulating molded product 220 may fill the coupling holes of the side plate, respectively. Thus, the side plate and the insulating molded product 220 may be firmly coupled.

FIG. 8 illustrates a cross-sectional view showing an example in which the side cover 20 of FIG. 4 is cut along a cutting line A-A'. According to some embodiments, the insulating molded product 220 may be manufactured by an injection molding method to be formed integrally with the side plate 210.

For example, first, the plate-shaped side plate 210 including the coupling holes may be placed in an injection mold. For example, the side plate 210 may be placed in a lower mold of the injection mold, and then the injection mold may be assembled by fitting an upper mold to the lower mold.

Thereafter, molten resin may be injected into a cavity inside the injection mold in which the side plate 210 is placed. In a specific example, a recess in which at least a portion of the first surface (i.e., a surface facing the cell stack in the battery module) is recessed toward the second surface facing the first surface may be formed in the side plate 210. Thus, a cavity corresponding to the recess may be formed between the injection mold and the first surface of the side plate 210. The molten resin may be injected into the cavity. In addition, a portion of the molten resin injected into the cavity may fill the coupling holes of the side plate 210.

Thereafter, in response to the molten resin being cooled, the insulating molded product 220 having the coupling portion filling the coupling holes may be molded. For example, a portion of the injected molten resin filling the cavity between the injection mold and the first surface of the side plate 210 may be cooled to form the plate-shaped body of the insulating molded product 220. In addition, a portion of the molten resin filling the coupling holes of the side plate 210 may be cooled to form the coupling protrusions of the insulating molded product 220.

Thereafter, the integral side cover 20 including the side plate 210 and the insulating molded product 220 may be removed from inside the injection mold. Because the side cover 20 is manufactured by an insert injection method, the integral side cover 20 may be taken out, with the insulating molded product 220 covering at least a portion of the side plate 210 and the coupling protrusions of the insulating molded product 220 filling the coupling holes of the side plate 210 (i.e., with the side plate 210 and the insulating molded product 220 being coupled).

Because the side covers 20 are provided on opposite sides of the cell stack, the supporting pressure of the cell stack is not high, unlike the case of the end plates provided at opposite ends of the cell stack in the direction of the arrangement of the battery cells. Thus, the insulating molded product 220 may be manufactured by a thin-film injection method such that the insulating molded product 220 thinly covers the surface of the side plate 210. The thickness of the insulating molded product 220 may be freely selected as long as no short shot occurs.

According to some embodiments, the insulating molded product 220 may include a material having one or more of the properties of thermal insulation, flame retardance, non-combustibility, or fire protection. Preferably, the insulating molded product 220 may comprise a thermally insulating and electrically insulating material.

Due to the side cover 20 according to the present disclosure, the strength of the battery module may be increased and excellent insulation effect may be expected, compared to a case where insulation paper is attached to the side plate 210 using adhesive.

In addition, in response to the insulating molded product 220 according to the present disclosure being injection molded at a low temperature compared to a case where the insulation paper is attached by heat fusion, thermal damage applied to the side plate 210 including the metal material may be reduced, and thus a defect rate due to the warping of the side plate may be reduced. In addition, the reduced cooling time may reduce production cycle time, which may lead to increased productivity.

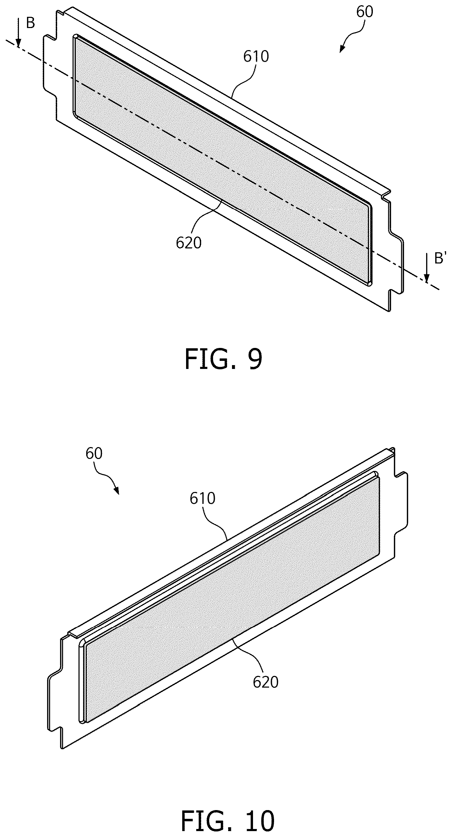

FIG. 9 illustrates a perspective view showing an example of a side cover 60 according to embodiments of the present disclosure, and FIG. 10 illustrates a perspective view showing an example of the side cover 60 of FIG. 9, seen on another side. The perspective view of FIG. 9 may mainly show a first surface of the side cover 60 (e.g., a surface facing the cell stack), and the perspective view of FIG. 10 may mainly show a second surface of the side cover 60 according to embodiments of the present disclosure, the second surface being opposite the first surface.

Referring to FIGS. 9 and 10, the side cover 60 may include a side plate 610 and an insulating molded product 620. The side plate 610 may have a plate shape elongated in one direction (e.g., the direction of the arrangement of the battery cells), and may be provided with a plurality of coupling holes. The side plate 610 included in the side cover 60 described with reference to FIGS. 9 and 10 may be the same as or similar to the side plate 610 described above with reference to FIG. 5. Thus, most of the features of the side plate 610 described above with reference to FIG. 5 may be applied to the side plate 610 included in the side cover 60 of FIGS. 9 and 10 in the same or similar manner.

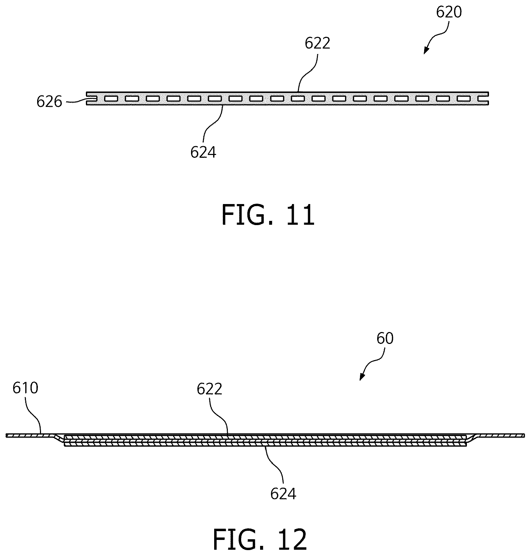

According to some embodiments, the insulating molded product 620 may include a first plate covering at least a portion of the first surface of the side plate 610 facing the cell stack and a second plate covering at least a portion of the second surface opposite the first surface of the side plate 610. In addition, the insulating molded product 620 may be provided with a coupling portion filling the coupling holes of the side plate 610. For example, the coupling portion of the insulating molded product 620 may include a plurality of coupling columns provided integrally with the first plate and the second plate of the insulating molded product 620. A specific configuration of the insulating molded product 620 according to these embodiments will be described in more detail later with reference to FIG. 11.

In the battery module, a single side cover 60 may be provided to face one surface of the cell stack, or a pair of side covers 60 may be provided on opposite sides of the cell stack. For example, the side cover 60 of FIGS. 9 and 10 may be provided in place of the side covers 20 of the battery module of FIG. 2. The side cover 60, with the insulating molded products 620 covering opposite sides of the side plate 610, may serve to not only insulate the side plate 610 and the cell stack, but also prevent or reduce heat transfer to an adjacent module.

FIG. 11 illustrates a plan view showing an example of the insulating molded product 620 according to embodiments of the present disclosure. The plan view of FIG. 11 may show an example in which the insulating molded product 620 according to embodiments of the present disclosure is seen from above (e.g., an upper cover side of the battery module, or in a plan view). Referring to FIG. 11, the insulating molded product 620 may include a first plate 622 and a second plate 624 each elongated in one direction (e.g., the direction of the arrangement of the battery cells in the battery module, i.e., the longitudinal direction of the side plate). The first plate 622 and the second plate 624 of the insulating molded product 620 may have the same or similar shape. In some embodiments, the first plate 622 of the insulating molded product 620 may cover at least a portion of a first surface of the side plate (e.g., a surface facing the cell stack in the battery module), and the second plate 624 of the insulating molded product 620 may cover at least a portion of a second surface of the side plate opposite the first surface. For example, the side plate may be provided with a first recess formed in at least a portion of the first surface and recessed toward the second surface opposite the first surface, and the first plate 622 of the insulating molded product 620 may fill at least a portion of the first recess of the side plate. In addition or in another example, the side plate may be provided with a second recess formed in at least a portion of the second surface and recessed toward the first surface, and the second plate 624 of the insulating molded product 620 may fill at least a portion of the second recess of the side plate. In another example, the side plate may have a flat configuration without a recess.

According to some embodiments, the insulating molded product 620 may be provided with a coupling portion filling the coupling holes of the side plate. For example, the coupling portion of the insulating molded product 620 may include a plurality of coupling columns 626 provided integrally with the first plate 622 and the second plate 624 of the insulating molded product 620. In a specific example, the insulating molded product 620 may be provided with a plurality of coupling columns 626 connecting the first plate 622 and the second plate 624. The coupling columns 626 of the insulating molded product 620 may be provided in the same number as the coupling holes of the side plate. The coupling columns 626 of the insulating molded product 620 may fill the coupling holes of the side plate, respectively. Thus, the side plate and the insulating molded product 620 may be firmly coupled.

FIG. 12 illustrates a cross-sectional view showing an example in which the side cover 60 of FIG. 9 is cut along a cutting line B-B'. According to some embodiments, the insulating molded product may be manufactured by an injection molding method to be formed integrally with the side plate 610.

For example, first, the plate-shaped side plate 610 including the coupling holes may be placed in an injection mold. For example, the side plate 610 may be placed in a lower mold of the injection mold, and then the injection mold may be assembled by fitting an upper mold to the lower mold.

Thereafter, molten resin may be injected into a cavity inside the injection mold in which the side plate 610 is placed. In a specific example, a recess in which at least a portion of the first surface (i.e., a surface facing the cell stack in the battery module) is recessed toward the second surface facing the first surface may be formed in the side plate 610. Thus, a cavity corresponding to the recess may be formed between the injection mold and the first surface of the side plate 610. A cavity may also be formed between the second surface of the side plate 610 and the injection mold. The molten resin may be injected into the cavities. In addition, a portion of the molten resin injected into the cavities may fill the coupling holes of the side plate 610.

Thereafter, in response to the molten resin being cooled, the insulating molded product having the coupling portion filling the coupling holes may be molded. For example, a portion of the injected molten resin filling the cavity between the injection mold and the first surface of the side plate 610 may be cooled to form the first plate 622 of the insulating molded product. Another portion of the injected molten resin filling the cavity between the injection mold and the second surface of the side plate 610 may be cooled to form the second plate 624 of the insulating molded product. In addition, a portion of the molten resin filling the coupling holes of the side plate 610 may be cooled to form the coupling protrusions connecting the first plate 622 and the second plate 624 of the insulating molded product.

Thereafter, the integral side cover 60 including the side plate 610 and the insulating molded product may be removed from inside the injection mold. Because the side cover 60 is manufactured by an insert injection method, the integral side cover 60 may be taken out, with the first plate 622 of the insulating molded product covering at least a portion of the first surface of the side plate 610, the second plate 624 of the insulating molded product covering at least a portion of the second surface of the side plate 610, and the coupling protrusions of the insulating molded product filling the coupling holes of the side plate 610 (i.e., with the side plate 610 and the insulating molded product being coupled).

Because the side covers 60 are provided on opposite sides of the cell stack, the supporting pressure of the cell stack is not high, unlike the case of the end plates provided at opposite ends of the cell stack in the direction of the arrangement of the battery cells. Thus, the insulating molded product may be manufactured by a thin-film injection method such that the insulating molded product thinly covers the surface of the side plate 610. The thickness of the insulating molded product 220 may be freely selected as long as insufficient molding does not occur.

According to some embodiments, the insulating molded product may include a material having one or more of the properties of insulation, flame retardance, non-combustibility, or fire protection. According to the above-described embodiments in which the insulating molded product is manufactured to cover opposite surfaces of the side plate 610, the integral side cover 60 may perform not only an insulating function, but also a function of preventing or reducing heat transfer to an adjacent module.

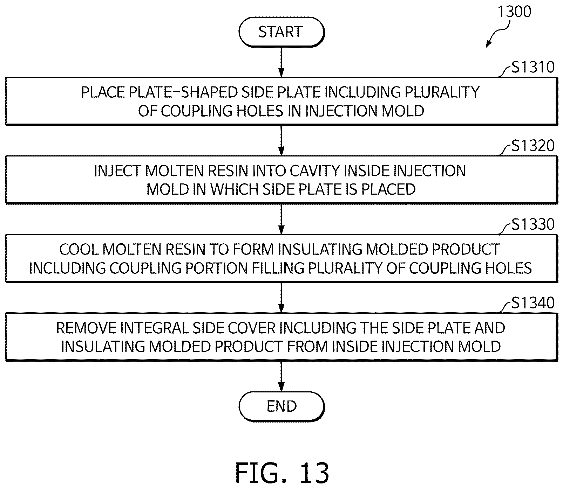

FIG. 13 illustrates a flowchart showing an example of a method 1300 of manufacturing a side cover of a battery module according to embodiments of the present disclosure. According to some embodiments, the method 1300 of manufacturing a side cover may be performed by, for example, a side cover manufacturing apparatus or a battery module manufacturing apparatus (hereinafter, referred to as a manufacturing apparatus). The side cover may include a plate-shaped side plate provided with a plurality of coupling holes and an insulating molded product provided with a coupling portion filing the coupling holes provided in the side plate. In some embodiments, the insulating molded product may be formed integrally with the side plate by insert injection.

For example, first, the manufacturing apparatus (e.g., a placement unit of the manufacturing apparatus) may place a plate-shaped side plate including a plurality of coupling holes in an injection mold in S1310. For example, the manufacturing apparatus may place the side plate in a lower mold of the injection mold and then assemble the injection mold by fitting an upper mold to the lower mold.

Thereafter, the manufacturing apparatus (e.g., the placement unit of the manufacturing apparatus) may inject molten resin into a cavity inside the injection mold in which the side plate is placed in S1320.

According to some embodiments, a first recess in which at least a portion of the first surface (i.e., a surface facing the cell stack in the battery module) is recessed toward the second surface facing the first surface may be formed in the side plate. Thus, a cavity corresponding to the first recess may be formed between the injection mold and the first surface of the side plate. The molten resin may be injected into the cavity, and a portion of the molten resin injected into the cavity may fill the coupling holes of the side plate.

According to some embodiments, a cavity may also be formed between a second surface of the side plate and the injection mold, in addition to between the injection mold and the first surface of the side plate. For example, a second recess in which at least a portion of the second surface is recessed toward the first surface may be formed in the side plate, and thus a cavity corresponding to the second recess may be formed between the injection mold and the second surface of the side plate. In addition or in another example, the second recess may be formed in a surface of the injection mold facing the second surface of the side plate, and thus a cavity corresponding to the second recess may be formed between the injection mold and the second surface of the side plate. The molten resin may be injected into the cavity, and a portion of the molten resin injected into the cavity may fill the coupling holes of the side plate.

Thereafter, the manufacturing apparatus (e.g., the placement unit of the manufacturing apparatus) may cool the molten resin to form an insulating molded product provided with a coupling portion filling the coupling holes in S1330.

In some embodiments, a portion of the injected molten resin filling the cavity between the injection mold and the first surface of the side plate may be cooled to form a plate-shaped body of the insulating molded product. In addition, a portion of the molten resin filling the coupling holes of the side plate may be cooled to form coupling protrusions of the insulating molded product.

According to some embodiments, a portion of the injected molten resin filling the cavity between the injection mold and the first surface of the side plate may be cooled to form a first plate of the insulating molded product. Another portion of the injected molten resin filling the cavity between the injection mold and the second surface of the side plate may be cooled to form a second plate of the insulating molded product. In addition, a portion of the molten resin filling the coupling holes of the side plate may be cooled to form coupling protrusions connecting the first plate and the second plate of the insulating molded product.

Thereafter, the manufacturing apparatus (e.g., a removal unit of the manufacturing apparatus) may remove the integral side cover including the side plate and the insulating molded product from inside the injection mold in S1340.

The flowchart of FIG. 13 and the above description are an example of the present disclosure, and the scope of embodiments according to the present disclosure is not limited to the flowchart of FIG. 13 and the above description. For example, one or more of the operations in the flowchart and the above description may be added/altered/deleted, the order of one or more of the operations may be changed, and one or more of the operations may be performed simultaneously.

Although aspects of some embodiments of the present disclosure have been described with reference to some embodiments and drawings illustrating aspects thereof, embodiments according to the present disclosure are not limited thereto. Various modifications and variations can be made by a person skilled in the art to which the present disclosure belongs within the scope of the claims and their equivalents, below.

## Claims

1. A battery module (1) comprising:
a cell stack comprising a plurality of battery cells (10) stacked in a direction; and
side covers (20, 60) on opposite sides of the cell stack,
wherein each of the side covers (20, 60) comprises:
a plate-shaped side plate (210, 610) comprising a plurality of coupling holes (214); and
an insulating molded product (220, 620) comprising a coupling portion filling the coupling holes (214).

2. The battery module (1) as claimed in claim 1, wherein the insulating molded product (220, 620) is integrally formed with the side plate (210, 610) by insert injection.

3. The battery module (1) as claimed in one of claims 1 or 2, wherein the insulating molded product (220) comprises a plate-shaped body (222) covering at least a portion of a first surface of the side plate (210, 610) facing the cell stack, and the coupling portion comprises a plurality of coupling protrusions (224) integrally formed with the plate-shaped body (222).

4. The battery module (1) as claimed in claim 3, wherein the side plate (210, 610) comprises a recess (212) provided in at least a portion of the first surface and recessed toward a second surface opposite the first surface, and
the plate-shaped body (222) of the insulating molded product (220) covers the recess (212) of the side plate (210, 610).

5. The battery module (1) as claimed in claim 1, wherein the insulating molded product (620) comprises a plate-shaped first plate (622) covering at least a portion of a first surface of the side plate (210, 610) facing the cell stack and a plate-shaped second plate (624) covering at least a portion of a second surface of the side plate (210, 610) opposite the first surface.

6. The battery module (1) as claimed in claim 5, wherein the coupling portion is integrally formed with the first plate (622) and the second plate (624), and comprises a plurality of coupling columns (626) connecting the first plate (622) and the second plate (624).

7. The battery module (1) as claimed in one of claims 5 or 6, wherein the side plate (210, 610) comprises a recess (212) in at least a portion of the first surface and recessed toward the second surface, and
the first plate (622) of the insulating molded product (620) covers the recess (212) of the side plate (210, 610).

8. The battery module (1) as claimed in at least one of the preceding claims, wherein each of the battery cells (10) comprises a prismatic battery cell.

9. The battery module (1) as claimed in at least one of the preceding claims, further comprising;
a pair of end plates (32) supporting outermost surfaces of the cell stack in the direction; and
an end insulating cover (34) provided between the cell stack and the end plates (32).

10. A method of manufacturing a side cover (20, 60) of a battery module (1), the method comprising:
placing a plate-shaped side plate (210, 610) comprising a plurality of coupling holes (214) in an injection mold;
injecting a molten resin into a cavity inside the injection mold in which the side plate (210, 610) is placed;
cooling the molten resin to form an insulating molded product (220, 620) comprising a coupling portion filling the coupling holes (214); and
removing an integral side cover (20, 60) comprising the side plate (210, 610) and the insulating molded product (220, 620) from inside the injection mold.

11. The method as claimed in claim 10, wherein the insulating molded product 220 comprises a plate-shaped body (222) covering at least a portion of the side plate (210, 610), and the coupling portion comprises a plurality of coupling protrusions (224) provided integrally with the plate-shaped body (222).

12. The method as claimed in one of claims 10 or 11, wherein the side plate (210, 610) comprises a recess (212) provided in at least a portion of a first surface and recessed toward a second surface opposite the first surface, and
the cavity into which the molten resin is injected is the recess (212) of the side plate (210, 610).

13. The method as claimed in claim 10, wherein the insulating molded product (620) comprises a plate-shaped first plate (622) covering at least a portion of a first surface of the side plate (210, 610) and a plate-shaped second plate (624) covering at least a portion of a second surface of the side plate (210, 610) opposite the first surface, and
the coupling portion is provided integrally with the first plate (622) and the second plate (624), and comprises a plurality of coupling columns (626) connecting the first plate (622) and the second plate (624).

14. The method as claimed in at least one of claims 10 to 13, wherein the cavity into which the molten resin is injected is on a first surface side of the side plate (210, 610) and a second surface side opposite the first surface side.

15. The method as claimed in at least one of claims 10 to 14, wherein the placing of the side plate (210, 610) in the injection mold comprises locating the side plate (210, 610) in a lower mold of the injection mold and fitting an upper mold of the injection mold to the lower mold.
